(19) Europäisches Patentamt
European Patent Office
Office européen des brevets

(11)  **EP 1 600 796 B1**

(12)  **FASCICULE DE BREVET EUROPEEN**

(45) Date de publication et mention
de la délivrance du brevet:
**24.07.2013  Bulletin 2013/30**

(51) Int Cl.:
***G01V 11/00*** *(2006.01)*

(21) Numéro de dépôt: **05290593.2**

(22) Date de dépôt: **17.03.2005**

(54) **Méthode de reconstruction d'un modèle stochastique pour améliorer son calage par les données de production**

Methode zur Rekonstruktion eines stochastischen Modells, um seine Anpassung an Produktionsdaten zu verbessern

Method of reconstructing a stochastic model for a better fit to production data

(84) Etats contractants désignés:
**DK GB IT NL**

(30) Priorité: **27.04.2004  FR 0404492**

(43) Date de publication de la demande:
**30.11.2005  Bulletin 2005/48**

(73) Titulaire: **Institut Français du Pétrole
92852 Rueil-Malmaison Cedex (FR)**

(72) Inventeurs:
• **Le Ravalec-Dupin, Mickaele
92500 Rueil-Malmaison (FR)**
• **Hu, Lin-Ying
92500 Rueil-Malmaison (FR)**
• **Roggero, Frédéric
92500 Rueil-Malmaison (FR)**

(56) Documents cités:
**EP-A- 0 864 882    FR-A- 2 795 841**

• **EASLEY D.H., BORGMAN L.E., SHIVE P.N.: "Geostatistical simulation for geophysical applications - Part I: Simulation" GEOPHYSICS, SEG, vol. 55, no. 11, 1 novembre 1999 (1999-11-01), - 30 novembre 1999 (1999-11-30) pages 1435-1440, XP002308198**

## Description

La présente invention concerne une méthode de reconstruction d'un modèle stochastique numérique issu d'une réalisation d'une fonction aléatoire et représentatif de la distribution d'une grandeur physique, dans un milieu hétérogène poreux.

En particulier, la méthode selon l'invention s'applique à la reconstruction d'un modèle stochastique numérique servant à représenter la distribution spatiale, dans une zone souterraine, de propriétés physiques continues ou discrètes, comme la perméabilité, le type de lithologie ou la porosité. Elle vise à donner à l'ingénieur les moyens de réutiliser un modèle stochastique numérique élaboré dans le passé, pour améliorer sa description en y intégrant par exemple des données de production nouvellement acquises. Cette étape d'amélioration nécessite par exemple un processus de calage des données ou d'optimisation. La méthode selon l'invention donne donc la possibilité de reconstruire un modèle stochastique numérique existant dans le but de l'améliorer, par exemple en le déformant localement ou globalement.

## Etat de la technique

L'étude d'une zone souterraine nécessite la construction de modèles numériques de réservoir. Un modèle numérique consiste en une grille à $N$ dimensions ($N>0$ et en général égale à deux ou trois) dont chacune des mailles se voit affecter la valeur d'une propriété caractéristique de la zone étudiée. Il peut s'agir par exemple de la porosité ou de la perméabilité distribuée dans un réservoir. Une telle valeur est appelée variable régionalisée. Il s'agit d'une variable continue, distribuée dans l'espace, et représentative d'un phénomène physique. Du point de vue mathématique, il s'agit simplement d'une fonction $z(u)$ prenant une valeur en chaque point $u$ (la maille de la grille) d'un domaine d'étude $D$ (la grille représentative du réservoir). Mais la variation de la variable régionalisée dans cet espace est trop irrégulière pour pouvoir être formalisée par une équation mathématique. En fait, la variable régionalisée représentée par $z(u)$ possède à la fois un aspect global, relatif à la structure spatiale du phénomène étudié, et un aspect local aléatoire.

Ce dernier aspect, local aléatoire, peut être modélisé par une variable aléatoire (VA). Une variable aléatoire est une variable qui peut prendre un certain nombre de réalisations $z$ suivant une certaine loi de probabilité. Des variables continues telles que des attributs sismiques (impédance acoustique) ou des propriétés pétrophysiques (saturation, porosité, perméabilité) peuvent être modélisées par des VA. De ce fait, au point $u$, la variable régionalisée $z(u)$ peut être considérée comme la réalisation d'une variable aléatoire $Z$.

Cependant, pour représenter correctement la variabilité spatiale de la variable régionalisée, il faut pouvoir prendre en compte le double aspect, à la fois aléatoire et structuré. Une des approches possibles, de type probabiliste, fait appel à la notion de fonction aléatoire. Une fonction aléatoire (FA) est un ensemble de variables aléatoires (VA) définies sur un domaine d'étude $D$ (la grille représentative du réservoir), c'est-à-dire $\{Z(u), u \in D\}$, également noté $Z(u)$. Ainsi tout groupe de valeurs échantillonnées $\{z(u_1), ..., z(u_n)\}$ peut être considéré comme une réalisation particulière de la fonction aléatoire $Z(u) = \{Z(u_1), ..., Z(u_n)\}$. La FA $Z(u)$ permet de prendre en compte à la fois l'aspect localement aléatoire (en $u_\alpha$, la variable régionalisée $z(u_\alpha)$ étant une VA) et l'aspect structuré (via la loi de probabilité spatiale associée à la FA $Z(u)$).

Les réalisations d'une fonction aléatoire fournissent des modèles stochastiques de réservoir. A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scenarii.

La construction d'un modèle stochastique de réservoir peut être décrite de la façon suivante :

- Tout d'abord, on mesure sur le terrain d'une part, des données statiques (diagraphies, mesures sur des échantillons prélevés dans les puits, sismique...) et d'autre part, des données dynamiques (données de production, essais de puits, temps de percée...) dont la particularité est de varier au cours du temps en fonction des écoulements de fluide dans le réservoir.

- Puis, à partir des données statiques, on définit une fonction aléatoire, caractérisée par sa fonction de covariance (ou de façon analogue par son variogramme), sa variance et sa moyenne.

- Par ailleurs on définit un ensemble de nombres aléatoires tirés indépendamment les uns des autres : il peut s'agir, par exemple, d'un bruit blanc Gaussien ou de nombres uniformes. Il existe donc un nombre aléatoire indépendant par maille et par réalisation.

- Enfin, à partir d'un simulateur géostatistique choisi et du jeu de nombres aléatoires, un tirage aléatoire dans la fonction aléatoire est effectué, donnant accès à une réalisation (continue ou discrète) représentant une image possible du réservoir. En général, cette réalisation ne vérifie pas les mesures effectuées ponctuellement. Une opération supplémentaire s'appuyant sur des techniques de krigeage permet de modifier la réalisation en la forçant à honorer ces mesures. Cette technique est décrite pas exemple dans le document suivant :

    Chilès, J.P., and Delfiner, P., 1999, Geostatistics - Modeling spatial uncertainty, Wiley series in probability and statistics, New York, USA.

- A ce stade, les données dynamiques n'ont pas été considérées. Elles sont intégrées dans les modèles de réservoir par le biais d'une optimisation ou d'un calage. On définit une fonction objectif mesurant l'écart entre les données dynamiques mesurées sur le terrain et les réponses correspondantes simulées pour le modèle considéré. Le but du processus d'optimisation est de modifier petit à petit ce modèle pour réduire la fonction objectif.

Au final, les modèles modifiés sont cohérents vis-à-vis des données statiques et vis-à-vis des données dynamiques. Cette phase de construction de modèles de réservoir nécessite un temps ingénieur et un temps calcul considérable.

Les techniques de calage des modèles de réservoir par les données dynamiques s'étant nettement améliorées ces dernières années du fait de la puissance accrue des ordinateurs et de l'apparition de nouvelles techniques de paramétrage, et les techniques de récupération d'hydrocarbures s'étant également nettement améliorées, l'ingénieur réservoir a fréquemment besoin de revenir sur des modèles de réservoir élaborés dans le passé. L'objectif est d'affiner ces modèles et de les mettre à jour au regard des données acquises depuis l'époque où le modèle avait été initialement élaboré.

Cependant, une difficulté essentielle demeure pour revenir sur des modèles numériques élaborés dans le passé. En effet, pour appliquer une méthode permettant d'affiner le calage d'une réalisation existante, il faut connaître le jeu de nombres aléatoires qui, lorsqu'il est donné au simulateur géostatistique, fournit le modèle numérique (la réalisation) en question. Or, en règle générale, cette information n'existe plus. De même, le modèle de variogramme (ou covariance), caractérisant la variabilité spatiale dans la zone souterraine de l'attribut représenté et nécessaire pour caractériser la fonction aléatoire, n'est plus connu. Ce dernier point est moins important, car l'étude du modèle numérique existant peut permettre de retrouver ce variogramme. Par contre, il n'existe à ce jour aucune méthode pour déterminer le jeu de nombres aléatoires sous-jacent au modèle numérique.

La méthode selon l'invention permet de reconstruire des modèles stochastiques numériques, c'est à dire, pour une fonction aléatoire déterminée au préalable, d'identifier un jeu de nombres aléatoires qui, donné en entrée à un simulateur géostatistique, conduit à une réalisation semblable au modèle numérique considéré. Elle comprend plusieurs algorithmes, itératifs ou non, qui suivant les conditions, permettent de reconstruire des réalisations continues ou discrètes.

De plus, les techniques de reconstruction développées sont compatibles avec la méthode de déformation graduelle, technique de paramétrage géostatistique répondant aux besoins de l'ingénieur et présentée dans l'article suivant :

Hu, L.-Y., 2000, Gradual deformation and iterative calibration of Gaussian-related stochastic models, Math. Geol., 32(1), 87-108.).

Elle donne en effet la possibilité de reprendre l'étude d'un réservoir et de le modifier partiellement dans les zones où de nouvelles données sont disponibles, comme c'est décrit dans le document suivant :

Le Ravalec-Dupin, M., Noetinger, B., Hu, L.-Y., and Blanc, G., 2001, Conditioning to dynamic data: an improved zonation approach, Petroleum. Geosciences, 7, S9-S16.

## La méthode selon l'invention

L'invention concerne une méthode pour reconstruire un modèle stochastique numérique, défini par une grille à au moins une dimension dont chacune des mailles se voit affecter la valeur d'au moins une grandeur physique caractéristique d'un milieu hétérogène poreux. La méthode comporte les étapes suivantes :

- on caractérise une fonction aléatoire par analyse statistique des dites valeurs des mailles du dit modèle stochastique numérique;

- on choisi un simulateur géostatistique;

- on identifie un jeu de nombres aléatoires qui, donné au simulateur géostatistique choisi, fourni une représentation proche dudit modèle stochastique numérique.

Selon l'invention, la caractérisation de la fonction aléatoire peut comporter une décomposition de la dite grandeur physique en deux termes, une moyenne non stationnaire et une perturbation, pour dégager une tendance non stationnaire.

L'identification des nombres aléatoires peut comporter l'utilisation de l'une des techniques suivantes : optimisation, relaxation, filtrage, méthode séquentielle et une combinaison des ces techniques.

La technique de reconstruction par optimisation peut comporter une minimisation d'une fonction objectif mesurant l'écart entre ledit modèle stochastique numérique ($y_{ref}$) et un modèle simulé (y) et on peut utiliser le gradient de la fonction objectif par rapport aux nombres aléatoires pour reconstruire le modèle par optimisation.

La technique de reconstruction par filtrage peut être appliquée à la réalisation de référence dont le support a été agrandi pour permettre de retrouver les bords de la réalisation de référence.

La technique de reconstruction par méthode séquentielle peut comporter un blocage de l'ordre suivant lequel les mailles sont visitées.

Enfin, selon l'invention, l'identification des nombres aléatoires permet de modifier, par déformation graduelle, le modèle reconstruit de façon globale ou locale.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre un exemple de réalisation de référence (trait fin), la moyenne non stationnaire théorique considérée pour générer la réalisation de référence (en pointillés) et la moyenne non stationnaire estimée (trait épais);

- la figure 2 montre, en haut, un exemple de réalisation avec 2 faciès et, en bas, les proportions estimées pour le faciès 2 (trait épais) comparées aux proportions théoriques (pointillés);

- la figure 3A montre, un exemple de modèle stochastique existant que l'on cherche à reconstruire;

- la figure 3B montre le modèle reconstruit par la méthode selon l'invention en utilisant l'algorithme d'optimisation;

- la figure 3C montre le bruit blanc Gaussien déterminé pour construire le modèle de la figure 3B;

- la figure 3D montre une analyse de la distribution du bruit blanc Gaussien déterminé pour construire le modèle de la figure 3B;

- la figure 4 montre un exemple de réalisation de référence (RR) ainsi que le modèle reconstruit (A) à partir d'un filtrage de Wiener appliqué sur un support plus grand que celui de l'image de référence;

- la figure 5A montre un exemple de réalisation de référence (RR) ainsi que le modèle reconstruit (A) à partir d'un filtrage de Wiener;

- la figure 5B montre les caractéristiques du bruit blanc Gaussien déterminé pour construire le modèle de la figure 5A;

- la figure 6 montre un exemple de correction, en cinq itérations, des effets de bords par relaxation (de gauche à droite et de haut en bas);

- la figure 7A montre un exemple de modèle de réservoir

- la figure 7B montre un exemple de réalisation de référence reconstruite à partir d'une approche séquentielle avec statistique multi-point;

- la figure 8 montre un exemple de déformation graduelle globale appliquée à la réalisation reconstruite sur la Figure 3 ; et

- la figure 9 montre un exemple de déformation graduelle locale appliquée à la réalisation reconstruite sur la Figure 3.

**Description détaillée de la méthode**

La méthode selon l'invention permet de reconstruire des modèles stochastiques numériques, c'est à dire, de déterminer une fonction aléatoire, puis d'identifier un jeu de nombre aléatoires qui donné en entrée à un simulateur géostatistique, conduit à une réalisation semblable au modèle numérique considéré. L'identification des nombres aléatoires se fait en utilisant plusieurs algorithmes, itératifs ou non, adaptés au cas des réalisations continues ou discrètes. La méthode de reconstruction d'un modèle stochastique donné peut alors se décomposer en 3 étapes :

1- Détermination d'une fonction aléatoire par analyse statistique.
2- Choix d'un simulateur géostatistique.
3- Identification du jeu de nombres aléatoires, en fonction du type de simulateur choisi et du type de réalisation (discret ou continu). Selon le cas, 4 techniques au choix ou en combinaison peuvent être envisagées :

- reconstruction par optimisation;

- reconstruction par relaxation;

- reconstruction par filtrage (Wiener);

- reconstruction par des méthodes séquentielles.

Ces techniques de reconstruction développées sont compatibles avec la méthode de déformation graduelle. Il s'agit d'une technique de paramétrage géostatistique qui répond aux besoins de l'ingénieur. Elle donne, en effet, la possibilité de reprendre l'étude d'un réservoir et de le modifier partiellement dans les zones où de nouvelles données sont disponibles.

Le problème à résoudre est le suivant. Connaissant une réalisation $y_{ref}$ (modèle stochastique numérique), dite de référence, peut-on identifier un jeu de nombres aléatoires, ou plus spécifiquement un bruit blanc Gaussien $z$ tel que le simulateur géostatistique S produise à partir de $z$ une réalisation $y$ aussi proche que possible de la réalisation de référence ? Les méthodes de simulation géostatistique produisent à partir d'un bruit blanc Gaussien des réalisations de deux types : les réalisations continues et les réalisations discrètes. Typiquement, une réalisation continue peut décrire la répartition spatiale d'un attribut comme la perméabilité. Les valeurs de perméabilité évoluent continûment d'un point à l'autre de l'espace. Parallèlement, une réalisation discrète peut décrire la répartition spatiale de faciès. Les différents faciès sont identifiés par un indicateur : par exemple 1 pour le faciès réservoir et 2, pour le faciès non réservoir. Quand on passe du faciès réservoir au faciès non réservoir, on a une discontinuité : on passe directement de 1 à 2. On peut également étendre le cadre de l'invention à un modèle complexe comprenant des faciès peuplés par un attribut variant continûment.

<u>La première étape de la méthode selon l'invention</u> consiste, par analyse statistique, à déterminer une fonction aléatoire caractérisant la réalisation de référence. Cette analyse comporte par exemple une analyse de la moyenne, de la variance et de la fonction de covariance C de la fonction aléatoire. Dans le cadre d'une mise en oeuvre particulière de la méthode, on choisit de déterminer une fonction aléatoire caractérisant la réalisation de référence corrigée de l'effet non stationnaire. Pour ce faire, on identifie dans un premier temps, quand elle existe, une tendance non stationnaire. Pour une réalisation continue, on suppose que la non stationnarité se traduit par une moyenne qui varie dans l'espace. Pour une réalisation en faciès, elle implique une variation des proportions de faciès dans l'espace.

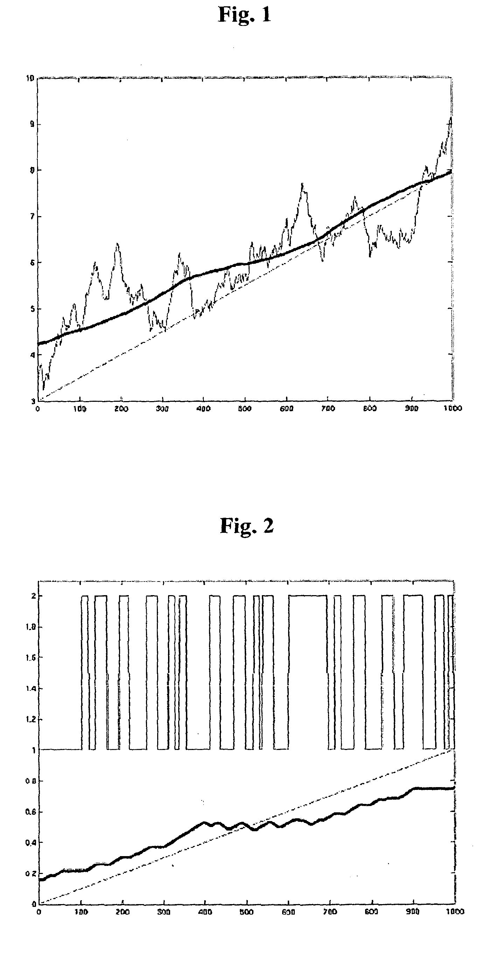

Soit tout d'abord une réalisation de référence continue. On suppose qu'elle équivaut à la somme de deux termes : une moyenne, non stationnaire et donc variable dans l'espace, basse fréquence, et une perturbation, stationnaire, qui peut être caractérisée par une fonction aléatoire. On sépare les deux termes à partir d'un filtrage. En effectuant le produit de convolution de la réalisation de référence par une fonction porte, on extrait la moyenne. La figure 1 montre un exemple de réalisation de référence (trait fin), la moyenne non stationnaire théorique considérée pour générer la réalisation de référence (en pointillés) et la moyenne non stationnaire estimée (trait épais). L'axe des abscisses indique le numéro de la maille et l'axe des ordonnées indique la valeur d'une grandeur physique associée à cette maille. On peut alors vérifier que cette moyenne est proche de celle qui a été considérée pour produire la réalisation de référence.

Dans le cas des réalisations en faciès, la non stationnarité s'exprime en termes de proportions : les proportions (ou probabilité de présence des différents faciès) sont fonctions de la position. L'objectif est à présent de déterminer l'évolution des proportions pour les différents faciès dans l'espace. La démarche poursuivie est analogue à celle introduite pour extraire une moyenne non stationnaire. Considérons, par exemple, une réalisation de référence à deux faciès, générée en intégrant une tendance linéaire pour les proportions. La proportion du faciès 1 vaut $x$=1 en 0 et 0 en $x$=1000, où $x$ est la position. La proportion du faciès 2 est complémentaire. Soit une fonction $f$ décrivant, pour cette réalisation de référence, la proportion du faciès 2 en tout point x. Dans les zones où le faciès 2 est présent, $f$ vaut 1. Ailleurs, $f$ est nulle. La convolution de $f$ avec une fonction porte permet de dégager la valeur moyenne de la proportion du faciès 2 en fonction de la position.

La figure 2 illustre, en haut, un exemple de réalisation avec 2 faciès et, en bas, les proportions estimées pour le faciès 2 (trait épais) comparées aux proportions théoriques (pointillés). L'axe des abscisses indique le numéro de la maille et l'axe des ordonnées indique, en haut, la valeur du faciès associée à cette maille, et en bas, la valeur des proportions estimées et théoriques. On montre sur cette figure que la tendance mise en évidence approche celle qui avait été prise en compte pour créer la réalisation de référence.

On suppose dans la suite que les tendances non stationnaires, si elles existent, ont été identifiées.

On peut alors, par analyse statistique, déterminer une fonction aléatoire stationnaire d'ordre au moins 2 caractérisant la réalisation de référence corrigée de l'effet non stationnaire. Une analyse statistique permet en effet de caractériser la fonction aléatoire en déterminant sa fonction de covariance C.

<u>La deuxième étape de la méthode selon l'invention</u> consiste à choisir un simulateur géostatistique. Les méthodes de simulation géostatistique produisent à partir d'un bruit blanc Gaussien, des réalisations de fonction aléatoire. Ils existent de nombreux simulateurs géostatiques, parmi lesquels on peut citer la méthode FFTMA, les méthodes de simulation séquentielle ainsi que la méthode des Gaussiennes tronquées.

*Méthode FFTMA*

La méthode FFTMA est décrite dans le document suivant :

Le Ravalec, M., Noetinger, B., and Hu, L.-Y., 2000, The FFT-Moving Average (FFT-MA) generator: An efficient tool for generating and conditioning Gaussian simulations, Math. Geol., 32(6), 701-723.

Cette méthode fournit des réalisations continues, multiGaussiennes et stationnaires, honorant une fonction de covariance donnée. Ces réalisations sont discrétisées sur des grilles cartésiennes et régulières comprenant un très grand nombre de mailles. Le coeur du simulateur FFTMA s'appuie sur une moyenne mobile, c'est à dire un produit de convolution. L'utilisation de transformées de Fourier rapides accélère les calculs.

Supposons que l'on veuille générer une réalisation $y$ de moyenne m et de fonction de covariance $C$. Le principe de la simulation est le suivant :

$$y = m + f * z.$$

*z* un bruit blanc Gaussien et *f* résulte de la décomposition de la fonction de covariance sous la forme d'un produit de convolution $C = f * \breve{f}$ , où $\breve{f}(x) = f(-x)$. La fonction *f* dépend uniquement de paramètres géostatistiques tels que le modèle de covariance, les axes principaux, les longueurs de corrélation....

*Méthodes de simulation séquentielle*

Une autre famille d'algorithmes de simulation très largement employés est connue sous le nom d'algorithmes de simulation séquentielle. On distingue trois classes d'algorithmes de simulation séquentielle : les algorithmes de simulation séquentielle Gaussienne, les algorithmes de simulation séquentielle d'indicatrices et les algorithmes de simulation séquentielle suivant une statistique multipoint. La première classe fournit des réalisations continues tandis que les deux dernières sont utilisées pour générer des réalisations en faciès.

Les algorithmes de simulation séquentielle Gaussienne et d'indicatrices sont décrits dans :

> Goovaerts, P., 1997, Geostatistics for natural resources evaluation, Oxford Univ. Press, New York, USA.

Les algorithmes de simulation séquentielle suivant une statistique multipoint sont décrits dans :

> Strebelle, S., 2002, Conditional simulation of complex geological structures using multiple-point statistics, Math. Geol., 34(1), 1-21.

*Méthode des Gaussiennes tronquées*

La méthode des Gaussiennes tronquées consiste à appliquer des seuillages à une réalisation *y* multiGaussienne standard (de moyenne zéro et de variance un) générée au préalable à l'aide d'un simulateur quelconque. Supposons que l'on cherche à produire des réalisations indiquant par des valeurs discrètes, 1, 2 ou 3, la présence de trois faciès, dénotés $F_1$, $F_2$ ou $F_3$. Le faciès $F_i$ est défini par :

$$F_i = \{u, s_{i-1} < y(u) < s_i\}$$

Les $S_i$ sont des seuils dont les valeurs se déduisent des proportions *p* des *N* faciès présents. La méthode des pluriGaussiennes est une extension de la méthode des Gaussiennes tronquées décrite dans le document suivant :

> Le Loc'h, G., and Galli, A., 1997, Truncated pluriGaussian method: Theoretical and practical points of view, in Geostatistics Wollongong'96, 1, 211-222.

Enfin, la dernière étape de la méthode selon l'invention est l'étape de reconstruction du jeu de nombres aléatoires. Selon le type de données (continu ou discret) et le type de simulateur choisi, quatre mises en oeuvre sont proposées, mettant en jeux quatre algorithmes différents. Dans chacun des cas, on suppose la moyenne *m* est connue. Ces quatre algorithmes sont expliqués et appliqués dans la suite.

***Reconstruction par optimisation***

Le premier algorithme est la technique la plus simple et la plus générale pour reconstruire une réalisation. Il s'appuie sur un processus d'optimisation qui consiste à minimiser une fonction objectif mesurant l'écart entre le modèle stochastique de référence $y_{ref}$ que l'on cherche à reconstruire et le modèle simulé *y*. Il s'agit d'un processus itératif très général qui s'adapte à la reconstruction tant des modèles continus que des modèles en faciès.

Soit une réalisation continue $y_{ref}$, dite de référence, de moyenne m et fonction de covariance *C*. On cherche à présent à estimer un bruit blanc Gaussien *z* permettant, lorsqu'il est donné à un simulateur géostatistique, de construire une réalisation *y* ressemblant autant que possible à $y_{ref}$. On traite ce problème sous la forme d'une optimisation. On définit une fonction objectif *J* mesurant l'écart entre le modèle de référence $y_{ref}$ et le modèle simulé *y* à partir d'un bruit blanc Gaussien *z* :

$$J(\mathbf{z}) = \frac{1}{2}\sum_j \left( y_j(\mathbf{z}) - y_{ref\,j} \right)^2 .$$

Diverses techniques de minimisation permettent de rendre cette fonction aussi petite que possible. Cette approche est envisageable pour tout simulateur géostatistique à condition de répéter à l'identique le processus de simulation. Par exemple, pour les algorithmes de simulation séquentielle, il faut geler le chemin aléatoire : l'ordre suivant lequel les mailles sont visitées ne doit pas être modifié d'une simulation à une autre.

Pour qu'une telle approche soit envisageable en pratique, il est préférable de disposer des gradients de la fonction objectif par rapport aux composantes du bruit blanc Gaussien. Considérons plus précisément le simulateur FFTMA. Il s'agit, dans ce cas, de déterminer le bruit blanc Gaussien *z* tel que :

$$y_{ref} = m + f * z$$

où *f* résulte, comme mentionné précédemment, de la décomposition de la fonction de covariance *C*. On montre que :

$$\frac{\partial J}{\partial z_k} = \sum_i \left(y_i - y_i^{ref}\right) f_{i-k}$$

$$= \left[\left(y_i - y_i^{ref}\right) * f\right]_k.$$

Pour les réalisations en faciès, l'utilisation de faciès de transition permet d'estimer les gradients. La technique de faciès de transition est décrite dans :

Schaaf, T. Mezghani, M. Chavent, G., 2002, Direct Conditioning of Fine Scale Facies Models to Dynamic Data by Combining Gradual Deformation and Numerical Upscaling Techniques, in Proceedings European Conference on the Mathematics of Oil Recovery, Freiberg, Germany, 3-6 September.

Les gradients étant connus, on peut utiliser, par exemple, un algorithme de type L-BFGS pour minimiser la fonction objectif. L'avantage de ce type d'algorithme est qu'il permet de considérer un très grand nombre de paramètres.

Cette première technique de reconstruction est applicable pour la reconstruction de réalisations continues et discrètes. Elle peut être employée seule, mais se pose alors le problème de définition du bruit blanc Gaussien initial. Une alternative intéressante consiste à faire appel au filtre de Wiener pour construire rapidement un bruit blanc Gaussien initial qui peut ensuite être améliorer par optimisation. Ce point sera abordé ultérieurement.

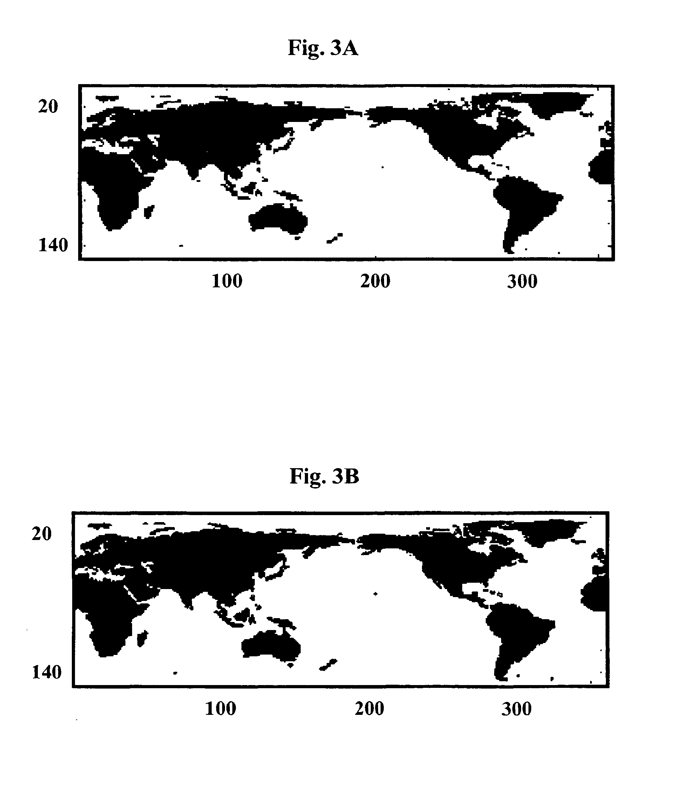

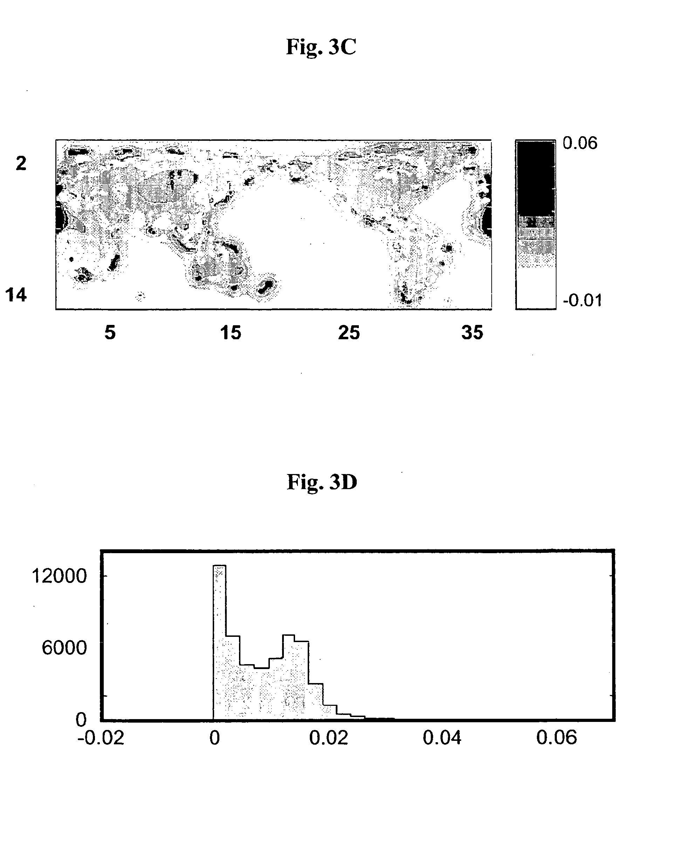

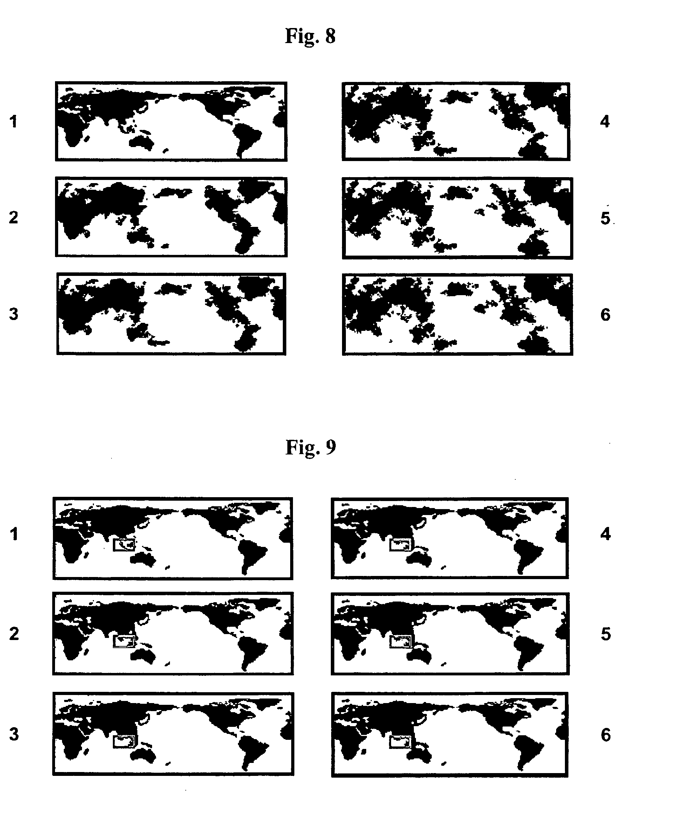

Les figures 3A, 3B, 3C et 3D illustrent une application de cette technique de reconstruction par optimisation. On suppose que l'image représentée sur la Figure 3A est une réalisation d'une fonction aléatoire (réalisation de référence). On observe la présence de deux faciès : les continents à 34% et l'océan à 66%. On suppose qu'elle peut être obtenue à partir de la méthode des Gaussiennes tronquées. Le processus de simulation auquel on se réfère est le suivant. On produit une réalisation continue à l'aide du simulateur FFTMA. La fonction aléatoire considérée est caractérisée par une moyenne nulle, une variance unitaire et un modèle de covariance stable et isotrope : l'exposant du modèle de covariance vaut 1,4 et la longueur de corrélation est de 40 mailles. Cette réalisation est ensuite seuillée en fonction des proportions des faciès. La grille sur laquelle la réalisation est discrétisée comprend 360x151 mailles. En appliquant une approche par optimisation, on estime un bruit blanc Gaussien *z* qui permet de reconstruire cette image de manière satisfaisante (Figure 3B). On observe sur les figures 3C et 3D que le bruit blanc *z* déterminé pour reconstruire l'image n'est pas effectivement un bruit blanc Gaussien : la figure 3C montre un caractère non aléatoire, cohérent, et la figure 3D montre une distribution du bruit non gaussienne. Cependant l'estimation du bruit blanc Gaussien est suffisante pour appliquer une technique de calage de modèle telle que la technique de déformation graduelle globale comme c'est illustré sur la figure 8 ou telle que la technique de déformation graduelle locale comme c'est illustré sur la figure 9.

## Reconstruction par relaxation

Le deuxième algorithme est basé sur une technique de résolution itérative par relaxation. Il a été développé plus spécifiquement pour les simulateurs géostatistiques faisant intervenir un produit de convolution et permet de reconstruire des modèles continus.

Ces techniques de relaxation ont été mises en place pour résoudre des systèmes linéaires du type **Ax=B, x** étant le vecteur rassemblant les inconnues. Ces techniques partent d'une solution approchée de **x** et cherchent à améliorer cette approximation à partir d'une succession d'itérations. La séquence converge (idéalement) vers la solution du système linéaire.

Revenons au problème explicité dans la section précédente. On cherche à estimer un bruit blanc Gaussien permettant, lorsqu'il est donné à un simulateur géostatistique, de construire une réalisation *y* ressemblant autant que possible à $y_{ref}$. On se concentre ici sur les simulateurs géostatistiques faisant intervenir un produit de convolution. Prenons l'exemple du simulateur FFTMA et supposons pour simplifier le formalisme que la moyenne *m* est nulle en tout point de l'espace. Il s'agit de déterminer le bruit blanc Gaussien *z* tel que :

$$y_{ref} = f * z$$

L'obtention de *z* requiert une opération de déconvolution. Sachant que le produit de convolution devient dans le domaine spectral un simple produit, on pourrait envisager de calculer les transformées de Fourier de $y_{ref}$ et *f*, et par division d'en déduire la transformée de Fourier de *z*. Cette approche directe ne peut pourtant être mise en oeuvre, car la transformée de Fourier de *f* comporte des composantes nulles. Nous proposons un algorithme s'inspirant des techniques de relaxation pour faire la déconvolution.

Supposons que $y_{ref} = f * z_{ref}$. La réalisation que l'on cherche à reconstruire est $y_{ref}$ et $z_{ref}$ est le bruit blanc Gaussien qui fournit $y_{ref}$. La fonction *f* est connue. On cherche à approcher $z_{ref}$. Soient un bruit blanc Gaussien *z* initial et *y* la réalisation en résultant : $y = f * z$. On pose alors :

$$\Delta y = y_{ref} - y$$

$$\Delta z = z_{ref} - z$$

$\Delta y$ est connu, on veut estimer $\Delta z$. La relation liant ces résidus s'exprime sous la forme suivante :

$$\Delta y = f * \Delta z$$

On suggère de décomposer la fonction $f$ comme la somme d'un dirac centré en 0 et d'une fonction complémentaire :

$$f = \delta + g$$

où $\delta(0) = a$, $a$ est une constante suffisamment grande pour assurer la convergence. La fonction $g$ est la même que $f$ partout sauf en 0 : $g(0) = f(0) - a$. L'extension à des dimensions supérieures est immédiate. En introduisant cette relation dans l'équation aux résidus, on obtient :

$$\Delta y = (\delta + g) * \Delta z$$
$$= \delta * \Delta z + g * \Delta z$$

Cette équation devient dans le domaine spectral :

$$\Delta Y = d\Delta Z + G\Delta Z$$

où $\Delta Y$ est la transformée de Fourier de $\Delta y$, $\Delta Z$ celle de $\Delta z$, $G$ celle de $g$ et $d$ est une constante égale à $\delta(0)$. En intégrant cette relation dans un processus itératif de relaxation, on écrit:

$$\Delta Y_i = d\Delta Z_{i+1} + G\Delta Z_i$$
$$\Delta Z_{i+1} = (\Delta Y_i - G\Delta Z_i)/d$$

La transformée inverse de $\Delta Z_{i+1}$ fournit la correction à apporter au bruit blanc Gaussien $z_i$.
Cette dernière expression est le coeur de l'algorithme développé pour reconstruire une réalisation. On procède comme suit.

1. Estimation de la fonction de covariance et calcul de $G$ et $d$.
2. Initialisation : tirage aléatoire d'un bruit blanc Gaussien initial, $z_0$, et $\Delta z_0 = 0$.
3. A l'étape $i(i = 0, 1, 2, 3 ...)$
4. Simulation de la réalisation $y_i = f * z_i$.
5. Calcul de $\Delta y_i = y_{ref} - y_i$ et de sa transformée de Fourier $\Delta Y_i$.
6. Calcul de $\Delta Z_i$, la transformée de Fourier de $\Delta z_i$.
7. Calcul de $\Delta Z_{i+1} = (\Delta Y_i - G\Delta Z_i)/d$.
8. Calcul de $\Delta z_{i+1}$, la transformée de Fourier inverse de $\Delta Z_{i+1}$.
9. Mise à jour de $z_{i+1} = z_i + \Delta z_{i+1}$.
10. $i = i+1$ et retour au point 3 jusqu'à ce que $\Delta y_i$ soit suffisamment petit.

Cette technique de reconstruction est applicable pour la reconstruction de réalisations continues. Elle peut être employée seule, mais se pose alors le problème de la définition du bruit blanc Gaussien initial. Une alternative intéressante consiste à faire appel au filtre de Wiener pour construire rapidement un bruit blanc Gaussien initial qui peut ensuite être améliorer par relaxation. Ce point sera abordé ultérieurement.

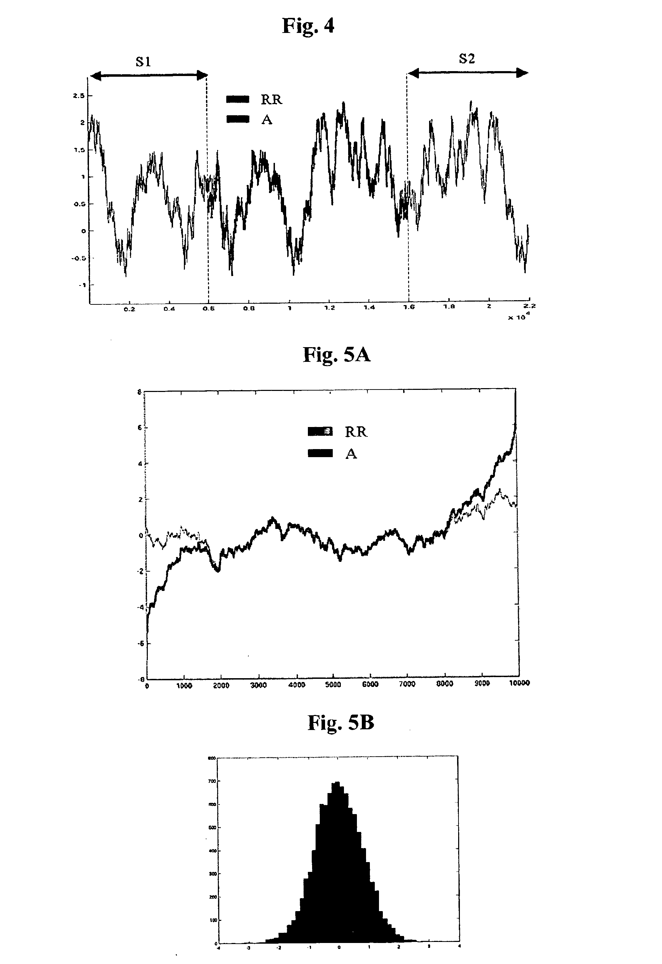

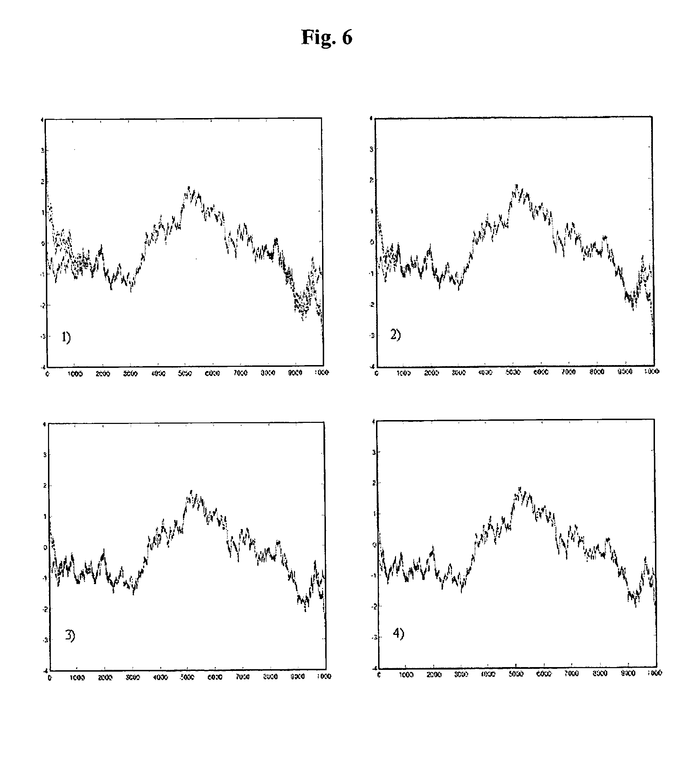

Les figures 5A, 5B et 6 illustrent une application de cette technique de reconstruction par relaxation. On considère une réalisation de référence unidimensionnelle (RR), discrétisée sur 10000 mailles (axe des abscisses), et caractérisée par un variogramme sphérique avec une longueur de corrélation égale à 3000 mailles. Tout d'abord, une première approximation du bruit blanc Gaussien initial est obtenu en utilisant le filtre de Wiener : elle permet de générer une réalisation (A) identique à la réalisation de référence, sauf sur les bords (figure 5A, où l'axe des ordonnées représente la valeur de la grandeur physique associée à la maille). Ce bruit blanc est bien Gaussien comme l'illustre la distribution de la figue 5B. Ce bruit est ensuite corrigé itérativement par relaxation. La reconstruction de la réalisation de référence est alors beaucoup mieux reproduite comme l'illustre la figure 6, où l'axe des abscisses représente le numéro de la maille et l'axe des ordonnées représente la valeur de la grandeur physique associée à la maille.

**Reconstruction par filtrage**

Le troisième algorithme utilise le filtre optimal de Wiener : il convient pour les simulateurs géostatistiques qui dépendent d'un produit de convolution. Ce troisième algorithme permet en une unique itération de reconstruire des modèles continus et s'étend à la reconstruction de modèles en faciès. Revenons au problème de déconvolution présenté dans la section précédente. Pour éviter cette difficulté, on se propose d'employer un filtre optimal de Wiener.
Dans le domaine spectral, la relation $y_{ref} = f * z_{ref}$ devient :

$$Y_{ref} = F.Z$$

où $Y_{ref}$, $F$ et $Z$ sont respectivement les transformées de Fourier de $y_{ref}$, $f$ et $z$. La mise en place du filtre de Wiener suppose qu'on remplace $F^{-1}$ par $\overline{F}\!\left/\!\left(|F|^2 + \varepsilon\right)\right.$ pour déduire $Z$ de $Y_{ref}$. $\overline{F}$ est le conjugué de $F$ et $\varepsilon$ est une constante suffisamment petite. On estime alors le bruit blanc Gaussien $z$ à partir de :

$$z = TF^{-1}\left(\frac{\overline{F}}{\left(|F|^2 + \varepsilon\right)} Y_{ref}\right).$$

où $TF^1$ signifie : transformée de Fourier inverse

Cette méthode de reconstruction convient pour les réalisations continues et peut être étendues au cas des réalisations en faciès. Pour ce faire, on transforme la réalisation en faciès en une réalisation continue. On peut utiliser pour ce faire la méthode décrite dans le document suivant :

> Le Ravalec, M., et Roggero, F., 2003, *Méthode pour élaborer plus rapidement un modèle stochastique représentatif d'un réservoir hétérogène souterrain, contraint par des données statiques et dynamiques incertaines,* brevet 03/02 199.

Puis on détermine un jeu de nombres aléatoires permettant de retrouver cette fonction continue. Cette méthode est extrêmement rapide, car elle ne requiert que le calcul de trois transformées de Fourier. Par contre, elle souffre d'effets de bord. Le bruit blanc Gaussien déterminé ne permet pas de retrouver les bords de la réalisation de référence sur une largeur égale à la longueur de corrélation. Ce défaut peut être réduit si on modifie la réalisation de référence de façon à agrandir son support. On peut, par exemple, prendre le symétrique de la réalisation de référence par rapport à chaque bord.

La figure 4 illustre une application de cette technique de reconstruction par filtrage. On considère une réalisation de référence unidimensionnelle (RR), discrétisée sur 10000 mailles (repérées sur l'axe des abscisses, et l'axe des ordonnées représentant la valeur de la grandeur physique associée à la maille), et caractérisée par un variogramme sphérique avec une longueur de corrélation égale à 3000 mailles. On augmente le support de la réalisation de référence en effectuant, par exemple, des symétries (S1 et S2 sur la figure 4). Lorsqu'on applique le filtre de Wiener à cette réalisation de référence agrandie, on obtient un bruit blanc Gaussien qui permet d'approcher assez bien (réalisation A sur la figure 4) la réalisation de référence.

## Reconstruction séquentielle

Le quatrième algorithme concerne les simulateurs géostatistiques séquentiels. Il reprend l'approche séquentielle mise en place pour les algorithmes de simulation séquentielle Gaussienne, d'indicatrices ou multi-point et permet de reconstruire des modèles continus ou en faciès. Comme pour le cas de l'optimisation, on gèle l'ordre suivant lequel les mailles sont visitées. Supposons que l'algorithme de simulation séquentielle utilisé visite les mailles suivant l'ordre 1, 2, 3, ..., $N$ où $N$ est le nombre de mailles. Cet ordre est le même pour l'algorithme de simulation et l'algorithme de reconstruction. On procède comme suit.

1. A l'étape i, visite de la maille i.
2. Estimation de la fonction de répartition conditionnelle en ce point.
3. Transformation de la valeur de $y_{ref}$ attribuée à cette maille en un nombre uniforme suivant la fonction de répartition identifiée.
4. Transformation du nombre uniforme en nombre Gaussien suivant la fonction de répartition normal standard.
5. $i=i+1$ et retour au point 1.

Ce processus s'adapte à la simulation séquentielle Gaussienne, la simulation séquentielle d'indicatrice et la simulation séquentielle avec une statistique multi-point.

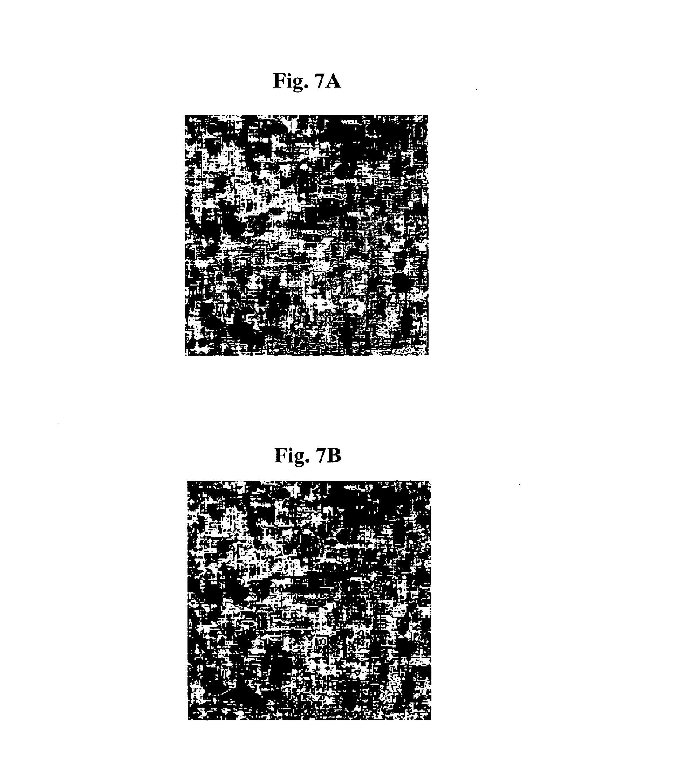

Les figures 7A et 7B illustrent une application de cette technique de reconstruction séquentielle. On cherche à reconstruire l'image de réservoir représentée sur la Figure 7A. La technique de simulation à laquelle on se réfère est l'approche séquentielle avec statistique multi-point. La Figure 7B montre le modèle de réservoir reconstruit à partir d'un bruit blanc. L'accord entre le modèle de référence et le modèle reconstruit est très bon. On observe des différences uniquement sur les bords du modèle, sur une bande dont la largeur dépend de la taille du template qui permet d'appréhender les statistiques multi-points.

En munissant l'ingénieur réservoir d'algorithmes de reconstruction, la méthode selon l'invention lui donne la possibilité de reconstruire un modèle de réservoir déjà établi et pour lequel on ne sait pas reproduire le processus de construction direct : on ne connaît plus ni la fonction aléatoire, ni les nombres aléatoires, ni même le processus itératif ayant conduit au calage des données de production.

De plus, les techniques de reconstruction développées sont compatibles avec la méthode de déformation graduelle. En effet, comme elles remontent aux nombres aléatoires, elles fournissent un modèle de réservoir qui peut être modifié localement ou globalement pour améliorer le calage par rapport aux données dynamiques ou intégrer des données nouvellement acquises.

**Revendications**

**1.** Méthode pour reconstruire un modèle stochastique numérique, défini par une grille à au moins une dimension dont chacune des mailles se voit affecter la valeur d'au moins une grandeur physique caractéristique d'un milieu hétérogène poreux, **caractérisée en ce que** la méthode comporte les étapes suivantes :

- on caractérise une fonction aléatoire par analyse statistique des dites valeurs des mailles du dit modèle stochastique numérique;
- on choisi un simulateur géostatistique;
- on identific un jeu de nombres aléatoires qui, donné au simulateur géostatistique choisi, fourni une représentation proche dudit modèle stochastique numérique, l'identification des nombres aléatoires comportant l'utilisation de l'une des techniques suivantes : optimisation, relaxation, filtrage, méthode séquentielle et une combinaison des ces techniques.

**2.** Méthode selon la revendication 1, dans laquelle la caractérisation de la fonction aléatoire comporte une décomposition de la dite grandeur physique en deux termes, une moyenne non stationnaire et une perturbation, pour dégager une tendance non stationnaire;

**3.** Méthode selon l'une des revendications précédentes, dans laquelle la technique de reconstruction par optimisation comporte une minimisation d'une fonction objectif mesurant l'écart entre ledit modèle stochastique numérique (yref) et un modèle simulé (y);

**4.** Méthode selon les revendications précédente, dans laquelle on utilise le gradient de la fonction objectif par rapport aux nombres aléatoire pour reconstruire le modèle par optimisation.

**5.** Méthode selon l'une des revendications précédentes, dans laquelle la technique de reconstruction par filtrage est appliquée à la réalisation de référence dont le support a été agrandi pour permettre de retrouver les bords de la réalisation de référence.

**6.** Méthode selon l'une des revendication précédentes, dans laquelle la technique de reconstruction par méthode séquentielle comporte un blocage de l'ordre suivant lequel les mailles sont visitées,

**7.** Méthode selon l'une des revendications précédentes, dans laquelle l'identification des nombres aléatoires permet de modifier, par déformation graduelle, le modèle reconstruit de façon globale ou locale.

**Patentansprüche**

**1.** Verfahren zum Rekonstruieren eines numerischen stochastische Modells, das von einem Gitter mit mindestens einer Dimension definiert wird, in dem jeder Masche der Wert mindestens einer physikalischen Größe zugewiesen wird, die für ein poröses heterogenes Medium charakteristisch ist, **dadurch gekennzeichnet, dass** das Verfahren die folgenden Schritte umfasst:

- Charakterisieren einer Zufallsfurtktion durch statistische Analyse der Weite der Maschen des numerischen stochastischen Modells;
- Auswählen eines geostatistischen Simulators;
- Identifizieren eines Satzes von Zufallszahlen, die bei Gabe an den ausgewählten geostatistischen Simulator eine Darstellung liefert, die dem numerischen stochastischen Modell nahe kommt, wobei die Identifizierung der Zufallszahlen die Verwendung einer der folgenden Techniken umfasst: Optimierung, Relaxation, Filterung, der sequenziellen Methode und einer Kombination dieser Techniken.

**2.** Verfahren nach Anspruch 1, wobei die Charakterisierung der Zufallsfunktion eine Dekomposition der physikalischen Größe in zwei Termini umfasst, einen zeitvariablen Mittelwert und eine Störgröße, um eine zeitvariable Neigung hervorzubringen.

**3.** Verfahren nach einem der vorhergehenden Ansprüche, wobei die Technik der Rekonstruktion durch Optimierung eine Minimierung einer objektiven Funktion umfasst, die den Unterschied zwischen dem numerischen stochastischen Modell (yref) und einem simulierten Modell (y) misst.

**4.** Verfahren nach einem der vorhergehenden Ansprüche, wobei der Gradient der objektiven Funktion In Bezug auf die Zufallszahlen verwendet wird, um das Modell durch Optimierung zu rekonstruieren.

**5.** Verfahren nach einem der vorhergehenden Ansprüche, wobei die Technik der Rekonstruktion durch Filterung auf die Referenzumsetzung angewendet wird, dessen Träger vergrößert wurde, um zu ermöglichen, die Ränder der Referenzumsetzung wiederzufinden.

**6.** Verfahren nach einem der vorhergehenden Ansprüche, wobei die Technik der Rekonstruktion durch die sequenzielle Methode eine Blockierung der Reihenfolge umfasst, gemäß derer die Maschen kontrolliert werden.

**7.** Verfahren nach einem der vorhergehenden Ansprüche, wobei die Identifizierung der Zufallszahlen ermöglicht, das rekonstruierte Modell durch allmähliche Verzerrung global oder lokal zu modifizieren.

structed model in a global or local manner.

## Claims

1. A method of reconstructing a numerical stochastic model, defined by an at least one-dimensional grid each cell of which is assigned the value of at least one physical quantity characteristic of a porous heterogeneous medium, **characterized in that** the method comprises the following stages:

   - characterizing a random function by statistical analysis of said values of the cells of said numerical stochastic model,
   - selecting a geostatistlcal simulator,
   - identifying a set of random numbers which, given to the geostatistical simulator selected, provides a representation close to said numerical stochastic model, the random number identification comprising using one of the following techniques: optimization, relaxation, filtering, sequential method and a combination of these techniques.

2. A method as claimed in claim 1, wherein characterization of the random function comprises decomposition of said physical quantity into two terms, a non-stationary mean and a perturbation, to bring out a non-stationary tendency.

3. A method as claimed in any one of the previous claims, wherein the technique of reconstruction by optimization comprises minimization of an objective function measuring the difference between said numerical stochastic model (yref) and a simulated model (y).

4. A method as claimed in any one of the previous claims, wherein the gradient of the objective function with respect to the random numbers is used to reconstruct the model by optimization.

5. A method as claimed in any one of the previous claims, wherein the technique of reconstruction by filtering is applied to the reference realization whose support has been enlarged so as to allow the edges of the reference realization to be recovered.

6. A method as claimed In any one of the previous claims, wherein the technique of reconstruction by sequential method comprises blocking the order in which the cells are visited.

7. A method as claimed in any one of the previous claims, wherein identification of the random numbers allows to modify, by gradual deformation, the reconstructed model by optimization.

## Fig. 1

## Fig. 2

## Fig. 3A

## Fig. 3B

**Fig. 3C**

**Fig. 3D**

## Fig. 4

## Fig. 5A

## Fig. 5B

**Fig. 6**

## Fig. 7A

## Fig. 7B

## Fig. 8

## Fig. 9

**EP 1 600 796 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0302199 A

**Littérature non-brevet citée dans la description**

- **CHILÈS, J.P. ; DELFINER, P.** Geostatistics - Modeling spatial uncertainty, Wiley series in probability and statistics. 1999
- **HU, L.-Y.** Gradual deformation and iterative calibration of Gaussian-related stochastic models. *Math. Geol.,* 2000, vol. 32 (1), 87-108
- **LE RAVALEC-DUPIN, M. ; NOETINGER, B. ; HU, L.-Y. ; BLANC, G.** Conditioning to dynamic data: an improved zonation approach. *Petroleum. Geosciences,* 2001, vol. 7, S9-S16
- **LE RAVALEC, M. ; NOETINGER, B. ; HU, L.-Y.** The FFT-Moving Average (FFT-MA) generator: An efficient tool for generating and conditioning Gaussian simulations. *Math. Geol.,* 2000, vol. 32 (6), 701-723
- **GOOVAERTS, P.** Geostatistics for natural resources evaluation. Oxford Univ. Press, 1997
- **STREBELLE, S.** Conditional simulation of complex geological structures using multiple-point statistics. *Math. Geol.,* 2002, vol. 34 (1), 1-21
- **LE LOC'H, G. ; GALLI, A.** Truncated pluriGaussian method: Theoretical and practical points of view. *Geostatistics Wollongong'96,* 1997, vol. 1, 211-222
- **SCHAAF, T. ; MEZGHANI, M. ; CHAVENT, G.** Direct Conditioning of Fine Scale Facies Models to Dynamic Data by Combining Gradual Deformation and Numerical Upscaling Techniques. *Proceedings European Conference on the Mathematics of Oil Recovery, Freiberg,* 03 Septembre 2002